Europäisches Patentamt

European Patent Office

Office européen des brevets

(19)

(11) Numéro de publication : **0 198 736**
**B1**

(12) **FASCICULE DE BREVET EUROPÉEN**

(45) Date de publication du fascicule du brevet :
30.08.89

(21) Numéro de dépôt : 86400546.7

(22) Date de dépôt : 14.03.86

(51) Int. Cl.⁴ : **C 01 F 17/00, C 25 B 1/00**

(54) **Procédé de séparation du cérium et de terres rares.**

(30) Priorité : 25.03.85 FR 8504372

(43) Date de publication de la demande :
22.10.86 Bulletin 86/43

(45) Mention de la délivrance du brevet :
30.08.89 Bulletin 89/35

(84) Etats contractants désignés :
AT BE CH DE FR GB IT LI LU NL SE

(56) Documents cités :
FR--A-- 2 486 818
FR--A-- 2 570 087
US--A-- 2 523 892
CHEMICAL ABSTRACTS, vol. 98, no. 8, 1983, page 407, abrégé 60659e, Columbus, Ohio, US; S. ZHANG et al.: "Electrolytic oxidation of cerium (III) and separation of cerium from promethium by extraction with 0.3M HDEHP-0.2M TBP/kerosene-240", & He Huaxue Yu Fangshe Huaxue 1982, 4(4), 243-8

(73) Titulaire : RHONE-POULENC CHIMIE
25, quai Paul Doumer
F-92408 Courbevoie Cédex (FR)

(72) Inventeur : Martin, Michel
113, rue Lamarck
F-75018 Paris (FR)
Inventeur : Rollat, Alain
3bis, rue Treich Laplene
F-17000 La Rochelle (FR)

(74) Mandataire : Dutruc-Rosset, Marie-Claude et al
RHONE-POULENC INTERSERVICES Service Brevets Chimie 25, Quai Paul Doumer
F-92408 Courbevoie Cédex (FR)

Jouve, 18, rue St-Denis, 75001 Paris, France

## Description

La présente invention concerne un procédé de séparation du cérium et des terres rares contenus dans une phase aqueuse.

Les métaux des terres rares se trouvent généralement associés dans divers minerais tels que la monazite, la bastnaesite ou le xénotime par exemple. Un moyen de séparer les différentes terres rares entre elles consiste à effectuer des opérations d'extractions liquide-liquide successives à partir de solutions de sels desdites terres rares.

Le procédé de la présente invention concerne le cas particulier de la séparation du cérium des autres terres rares (TR) en partant d'une solution aqueuse de ces éléments et notamment d'une solution nitrique.

On connaît déjà des procédés permettant une telle séparation (voir par exemple US-A 2 564 241 et 2 523 892). Généralement ces procédés sont basés sur la propriété d'extraction sélective du cérium (IV) par rapport aux TR (III) de certains solvants organiques comme le tributylphosphate (US-A 2 564 241) ou le nitrométhane (US-A 2 523 892). On met ainsi en contact une phase aqueuse comprenant le cérium (IV) et TR (III) avec un solvant du type précité qui extrait le cérium, les TR (III) restant dans le raffinat aqueux. Pour reextraire ensuite le cérium on refait passer celui-ci à l'état d'oxydation (III) par une réduction chimique et on met en contact la phase organique avec une phase aqueuse ce par quoi on récupère le cérium.

S'ils permettent une séparation efficace du cérium, ces procédés présentent néanmoins un inconvénient. En effet, l'utilisation d'un réducteur chimique implique l'introduction d'impuretés sous la forme notamment d'espèces organiques ou métalliques étrangères. Elle entraîne en plus une consommation de réactifs. En outre il est souvent nécessaire de prévoir un appareillage conséquent.

Par ailleurs, ZHANG Shaoqi et al. ont étudié (Chemical Abstracts 98, 60659e (1983)) la séparation du cérium et du prométhium, en effectuant l'oxydation électrochimique du cérium III, l'extraction du cérium IV formé par un solvant organique HDEHP-TPB kérosène, puis une réduction chimique du cérium IV.

L'objet de l'invention est d'offrir un procédé simple à mettre en oeuvre, permettant une séparation efficace du cérium des autres terres rares et l'obtention ultérieure d'un cérium de très haute pureté.

Dans ce but, une première variante de l'invention consiste en un procédé de séparation du cérium et de terres rares à partir d'une phase aqueuse contenant les terres rares et le cérium (III), qui consiste à oxyder électrochimiquement le cérium (III) en cérium (IV) et à séparer le cérium des terres rares par extraction liquide-liquide à l'aide d'une phase organique extractive du cérium (IV) et qui est caractérisé en ce qu'il comporte les étapes suivantes :

$a_1$) on fait passer ladite phase aqueuse contenant les terres rares et le cérium (III) dans le compartiment anodique d'une cellule d'électrolyse ce par quoi le cérium (III) est oxydé en cérium (IV) ;

$b_1$) on met en contact la phase aqueuse issue du compartiment anodique précité avec une phase organique extractive pour le cérium (IV) ce par quoi après séparation des phases on obtient une phase organique chargée en cérium (IV) et une phase aqueuse chargée en terres rares ;

$c_1$) on fait passer la totalité ou une partie de la phase organique chargée en cérium (IV) dans le compartiment cathodique de la cellule d'électrolyse précitée, on alimente par une phase aqueuse nitrique ledit compartiment et on y forme un mélange intime de ladite phase aqueuse et de la phase organique ce par quoi on réduit le cérium (IV) en cérium (III) ;

$d_1$) on sépare le mélange issu du compartiment cathodique en une phase aqueuse chargée en cérium (III) qui constitue la production et en une phase organique.

Selon une deuxième variante de l'invention le procédé de séparation du cérium et de terres rares à partir d'une phase aqueuse contenant les terres rares et le cérium (III), qui consiste à oxyder électrochimiquement le cérium (III) en cérium (IV) et à séparer le cérium des terres rares par extraction liquide-liquide à l'aide d'une phase organique extractive du cérium (IV) est caractérisé en ce qu'il comporte les étapes suivantes :

$a_2$) on fait passer la phase aqueuse contenant les terres rares et le cérium (III) dans le compartiment anodique d'une cellule d'électrolyse ce par quoi le cérium (III) est oxydé en cérium (IV) ;

$b_2$) on met en contact la phase aqueuse issue du compartiment anodique précité avec une phase organique extractive pour le cérium (IV) ce par quoi après séparation des phases on obtient une phase organique chargée en cérium (IV) et une phase aqueuse chargée en terres rares ;

$c_2$) on alimente le compartiment cathodique de la cellule d'électrolyse précitée en une phase aqueuse nitrique ce par quoi on crée un dégagement de gaz comprenant des $NO_x$ ;

$d_2$) On met en contact la phase organique chargée en cérium (IV) de l'étape $b_2$ avec le courant de gaz précité ce par quoi on réduit le cérium (IV) en cérium (III) ;

$e_2$) la phase organique issue de l'étape $d_2$ est mise en contact avec une phase aqueuse ce par quoi après séparation des phases on obtient une phase aqueuse chargée en cérium (III) qui constitue la production et une phase organique substantiellement exempte de cérium.

D'autres caractéristiques et avantages de l'invention seront mieux compris à la lecture de la description qui va suivre faite en référence aux dessins annexés pour lesquels :

la figure 1 est une représentation schématique d'une installation mettant en oeuvre la première variante de l'invention selon un premier mode de réalisation ;

la figure 2 est une représentation schématique d'une installation mettant en oeuvre la première variante de l'invention selon un deuxième mode de réalisation ;

la figure 3 est une représentation schématique d'une installation mettant en oeuvre une deuxième variante de l'invention.

la figure 4 est une représentation schématique d'une installation mettant en oeuvre un type particulier de cellule d'électrolyse dans le cadre de la première variante de l'invention ;

la figure 5 représente la mise en oeuvre d'une cellule d'électrolyse identique à celle de la figure 4 dans la deuxième variante de l'invention.

Le procédé de l'invention part d'une phase aqueuse contenant le cérium et les terres rares à l'état d'oxydation (III). Généralement il s'agit d'une solution nitrique.

La première partie du procédé quelle que soit la variante considérée consiste à oxyder le cérium à l'état (IV). Cette oxydation se fait par électrolyse, par passage de la solution aqueuse dans le compartiment anodique d'une cellule d'électrolyse.

La cellule électrolytique utilisée pour la mise en oeuvre du procédé de l'invention est une cellule à séparateur de type connu. Comme séparateur, on peut utiliser un matériau poreux tel qu'une céramique ou une matière plastique rendue poreuse par frittage ou par introduction de porophore ou une membrane échangeuse d'ions. Parmi ces séparateurs, on préfère une membrane échangeuse d'ions cationique, de préférence constituée de polymère perfluoré à groupements acide sulfonique. La cathode est en général constituée de graphite ou de préférence d'un métal et plus particulièrement de titane, titane platiné ou titane revêtu de palladium. L'anode peut être constituée de différents métaux comme le titane, le titane revêtu de platine, d'iridium ou un alliage titane/métaux précieux. La configuration de la cellule est en général du type plane à grande surface d'électrode et à espacement faible entre les électrodes. Dans une forme de mise en oeuvre industrielle, on peut utiliser une batterie d'éléments d'électrolyse montés en série dans un dispositif multicellulaire du type filtre-presse bien connu. Afin de favoriser les réactions électrochimiques, il peut s'avérer judicieux d'augmenter la surface active des électrodes ou de provoquer une agitation importante des solutions par des jeux de chicanes.

Dans le compartiment anodique à la suite de l'électrolyse le cérium passe à l'état d'oxydation (IV), les terres rares restant à l'état d'oxydation III.

La solution aqueuse issue du compartiment anodique de la cellule est ensuite mise en contact avec une phase organique capable d'extraire le cérium (IV).

Les conditions de cette extraction sont connues de l'homme de l'art. Elles sont rappelées ci-dessous.

La phase organique comprend un extractant. Cet extractant doit pouvoir extraire sélectivement le cérium (IV), les TR (III) devant rester en phase aqueuse. On pourra utiliser d'une manière générale tout agent solvatant qui ne puisse pas être oxydé par le cérium (IV). On pourra notamment choisir cet extractant parmi le groupe comprenant les phosphates, les phosphonates, les phosphinates, les oxydes de phosphine, les sulfoxydes.

On peut aussi utiliser des produits choisis dans le groupe des acides mono ou dialkylphosphorique, alkylphosphonique, alkylphosphinique, alkylphénylphosphonique.

Tous les produits cités peuvent bien entendu être utilisés seuls ou en mélanges. On emploie plus particulièrement les phosphates de trialkyl et notamment le tributylphosphate (TBP).

La phase organique contient, le cas échéant, un diluant organique inerte vis-à-vis des extractants afin d'améliorer les propriétés hydrodynamiques de la phase organique. De nombreux solvants organiques ou leurs mélanges peuvent être utilisés en tant que diluant. Toutefois dans le cas présent, il faut choisir un diluant qui puisse ne pas être oxydé par le cérium (IV).

A titre d'exemple on peut citer les hydrocarbures aliphatiques et les hydrocarbures halogénés.

La mise en contact des deux phases peut se faire à co- ou contre-courant dans tout appareil convenable du type mélangeur-décanteur par exemple.

Après séparation des phases on obtient une phase organique chargée en cérium (IV) et une phase aqueuse chargée en TR (III) et substantiellement exempte de cérium.

La phase organique peut subir ensuite deux traitements différents selon l'invention.

Selon une première variante, on fait passer cette phase dans le compartiment cathodique de la même cellule d'électrolyse décrite plus haut.

Conjointement au passage de la phase organique à travers la cellule, on fait circuler dans ce même compartiment cathodique une phase aqueuse nitrique.

Cette phase aqueuse est généralement une solution d'acide nitrique de préférence à une concentration d'au moins 1 N, plus préférentiellement au moins 4 N. Ce peut être aussi une solution aqueuse nitrique faiblement acide, environ 0,5 à environ 2 N par exemple, à base de nitrates notamment de nitrate d'ammonium, de nitrate alcalin ou alcalinoterreux, ou de nitrate de cérium.

On opère de manière à former dans le compartiment cathodique un mélange intime de la phase aqueuse nitrique et de la phase organique. Ce mélange pourra être obtenu en faisant circuler les phases à une vitesse suffisante et en plaçant dans le compartiment des promoteurs de turbulence. Compte tenu de l'acidité de la phase aqueuse et de la nature de la cathode, la phase aqueuse est réduite en NO et $NO_2$, ces oxydes d'azote réduisant à leur tour le cérium (IV) en cérium (III).

Le mélange contenant le cérium est à la sortie de la cellule d'électrolyse séparé en une phase aqueuse chargée en cérium (III) et une phase organique. Cette séparation peut se faire dans tout appareil convenable.

Généralement la phase organique est recyclée à l'étape d'extraction. Préalablement au recyclage, il est avantageux de prévoir un lavage par une phase aqueuse de manière à récupérer la petite quantité de cérium (III) qui aurait pu rester en phase organique lors de la séparation du mélange. La phase aqueuse obtenue après séparation des phases est ensuite réunie à la phase aqueuse chargée en cérium (III) obtenue lors de la séparation précitée.

La phase aqueuse à utiliser pour le lavage peut être soit de l'eau, soit une solution diluée d'acide nitrique.

L'invention comprend aussi une deuxième variante dans laquelle la phase organique chargée en cérium (IV) après l'extraction liquide-liquide ne passe plus dans la cellule d'électrolyse. Dans cette deuxième variante on ne fait circuler dans le compartiment cathodique de la cellule qu'un courant d'une phase aqueuse nitrique de même nature que celle décrite plus haut. Il se produit alors dans ce compartiment un dégagement de gaz comprenant des oxydes d'azote $NO_x$. On travaille dans le compartiment cathodique dans des conditions voisines de celles définies plus haut de sorte que les $NO_x$ sont essentiellement les oxydes NO et $NO_2$. Ce courant gazeux est alors mis en contact dans un réacteur avec la phase organique chargée en cérium (IV). On effectue dans le réacteur un mélange intime du gaz et de la phase organique grâce à une agitation convenable. On récupère après ce traitement une phase organique chargée en cérium (III). Cette phase organique est réextraite par une phase aqueuse qui peut être soit de l'eau, soit une solution diluée d'acide nitrique. On obtient alors, après la séparation des phases, une phase aqueuse chargée en cérium (III) qui constitue la production, et une phase organique substantiellement exempte de cérium.

Généralement on recycle cette phase organique à l'étape d'extraction de la phase aqueuse chargée en cérium (IV) issue du compartiment anodique de la cellule.

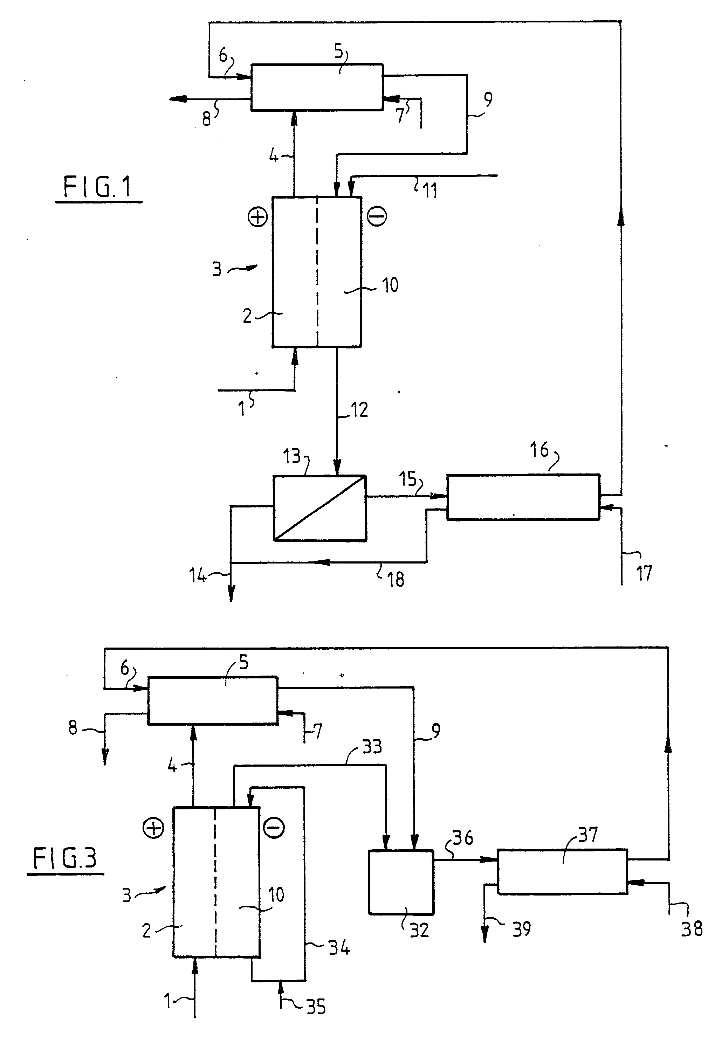

La figure 1 illustre la première variante de l'invention. La phase aqueuse de départ 1 traverse le compartiment anodique 2 de la cellule d'électrolyse 3 puis par 4 est conduite dans une batterie d'extraction 5 où elle est mise en contact avec la phase organique extractante 6. De l'eau ou de l'acide dilué peut être envoyé par 7 dans la même batterie pour un stripping.

De la batterie 5 sortent un raffinat aqueux 8 chargé en TR (III) et une phase organique 9 chargée en cérium (IV). Cette dernière phase passe à travers le compartiment cathodique 10 de la cellule 3, ce compartiment étant aussi alimenté en 11 par la phase aqueuse nitrique.

Le mélange formé dans le compartiment 10 passe par 12 dans un séparateur 13.

On sort de ce séparateur une phase aqueuse 14 chargée en cérium (III) et une phase organique 15 qui, éventuellement, peut contenir des petites quantités de cérium (III). Afin de récupérer ce cérium, la phase organique 15 passe dans une batterie de mélangeurs-décanteurs 16 alimentée à contre-courant en 17 par de l'eau ou une solution acidifiée. La phase aqueuse, après séparation 18, est réunie à la phase 14, alors que la phase organique est recyclée à l'extraction dans la batterie 5.

Lors de l'électrolyse dans la cellule 3, il peut y avoir passage à travers le séparateur du compartiment anodique au compartiment cathodique d'une petite quantité d'ions $TR^{3+}$ que l'on retrouve dans la solution 14.

Cette présence de TR avec le cérium, bien que très faible, peut néanmoins présenter des inconvénients pour certaines utilisations ultérieures du cérium nécessitant une pureté très élevée.

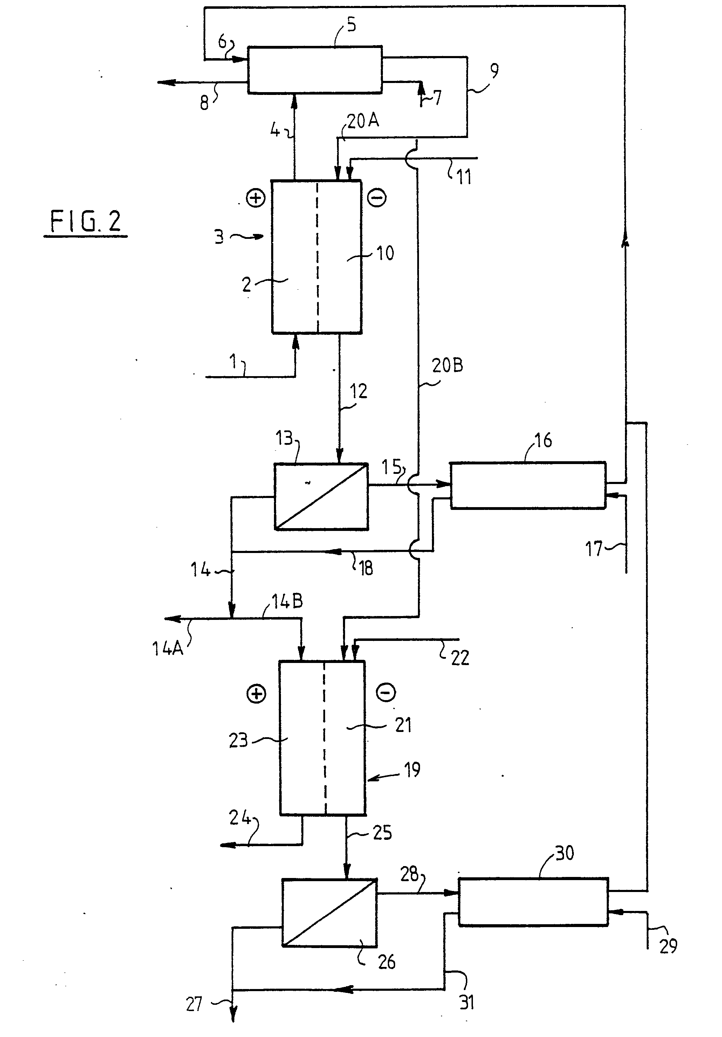

Pour remédier à ce problème, l'invention comprend un deuxième mode de réalisation pour la variante illustrée par la figure 1. Ce deuxième mode qui est présenté schématiquement dans la figure 2 comporte tout l'ensemble des étapes du mode de réalisation de la figure 1. Pour cela, les mêmes références ont été utilisées dans les deux figures.

Par contre, on utilise une seconde cellule d'électrolyse 19 qui présente les mêmes caractéristiques de structure que celles données plus haut dans la description. En outre la phase organique 9 issue de la batterie d'extraction 5 est divisée en deux parties. La première 20 A alimente la cellule 3 alors que la seconde 20 B alimente le compartiment cathodique 21 de la cellule 19. Ce compartiment est aussi alimenté par 22 avec une phase aqueuse chargée en cérium (III) passe dans le compartiment cathodique 23 de la cellule 19. On récupère en 24 une phase aqueuse chargée en cérium (IV).

Le mélange formé dans le compartiment 21 est conduit, comme dans le premier mode de réalisation, par 25 dans un séparateur 26.

On récupère en 27 une phase aqueuse chargée en cérium (III) et cette fois substantiellement exempte de TR (III).

On peut prévoir de la même manière que dans le mode de réalisation de la figure 1 avant le recyclage de la phase organique 28 issue du séparateur 26 un stripping par de l'eau ou une solution acide 29 dans la batterie 30 et réunion de la phase aqueuse résultante 31 avec la phase 27.

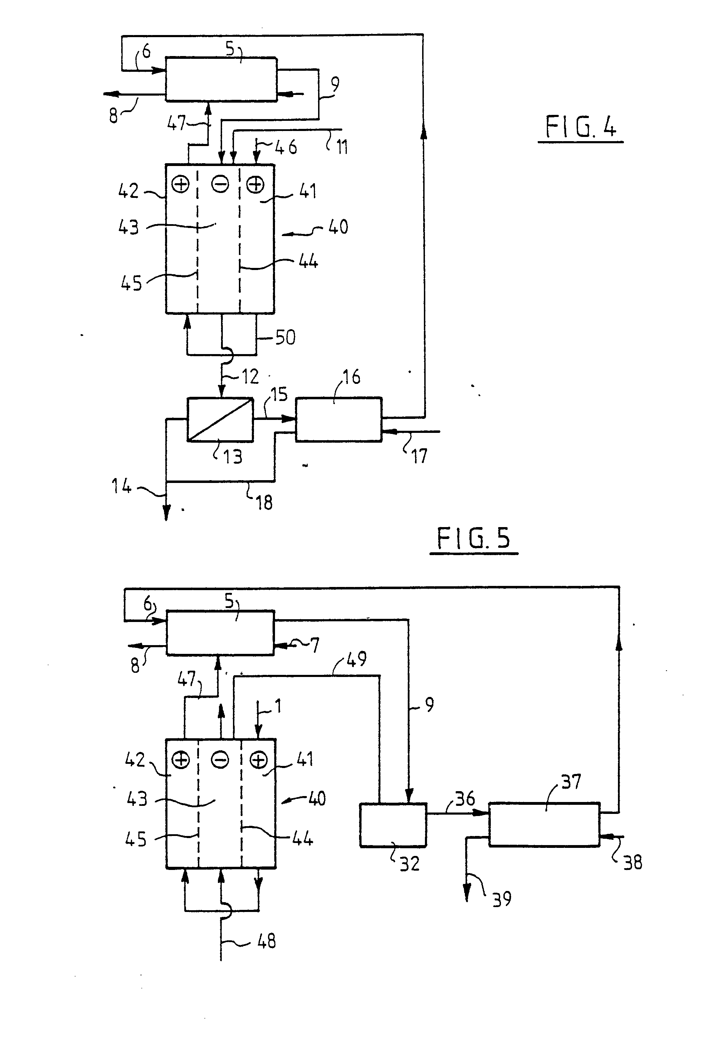

La figure 3 illustre la deuxième variante de l'invention.

Cette deuxième variante permet de s'affranchir aussi d'une manière simple du problème qui sc pose pour le mode de réalisation de la figure 1, c'est-à-dire la présence d'ions $TR^{3+}$ avec le cérium obtenu en fin de procédé.

On a repris les mêmes références pour les parties communes aux deux variantes.

La phase organique chargée en cérium (IV) est conduite dans un réacteur 32 où elle est traitée par le courant gazeux chargé en NO$_x$ 33. Ce courant provient du compartiment cathodique 10 de la cellule d'électrolyse 3 dans lequel circule en bouche fermée une phase aqueuse nitrique 34 dont le titre est ajusté par une alimentation 35.

La phase organique 36 est réextraite dans la batterie 37 par de l'eau ou un acide dilué 38 et on obtient une phase aqueuse 39 chargée en cérium (III). La phase organique exempte de cérium est recyclée à l'extraction dans la batterie 5.

Les figures 4 et 5 illustrent une mise en oeuvre particulière de l'invention basée sur l'utilisation d'une cellule d'électrolyse spécifique.

Grâce à cette cellule on peut obtenir un rendement faradique très élevé au voisinage de 100% pour une grande productivité, celle-ci étant mesurée par le débit de solution à traiter entrant dans le système.

La cellule utilisée a été décrite dans la demande de brevet français n° 84 13641.

Comme on peut le voir sur les figures 4 et 5, cette cellule 40 est constituée de trois compartiments. Les compartiments 41 et 42 sont des compartiments anodiques entre lesquels est situé un compartiment cathodique 43. Ces compartiments sont séparés les uns des autres par deux membranes cationiques 44 et 45. En ce qui concerne la structure des compartiments et des électrodes on peut se référer à la description qui a été faite plus haut et à celle de la demande de brevet mentionnée ci-dessus.

Dans le mode de réalisation de la figure 4, la solution aqueuse de départ 46 chargée en TR (III) et cérium (III) passe dans le premier compartiment anodique 41 puis dans le second. On reçoit en 47 une solution aqueuse chargée en TR (III) et en cérium (IV) qui est ensuite extraite par la phase organique. La suite du procédé se déroule d'une manière identique à celle décrite dans le cadre notamment de la figure 1. Pour cette raison les mêmes références sont utilisées. Le compartiment central cathodique 43 est alimenté par la phase aqueuse nitrique 11 et la phase organique 9 issue de l'extraction.

Naturellement, il est tout-à-fait possible de mettre en oeuvre le mode de réalisation de la figure 2 en utilisant à la place des cellules 3 et 19 deux cellules à trois compartiments du type décrit plus haut. Les conduites 20 A et 20 B indiquées dans la figure 2 alimentant chacune respectivement le compartiment cathodique central de chacune des cellules. La conduite 14 alimentera successivement chaque compartiment anodique de la deuxième cellule.

Dans le mode de réalisation de la figure 5, la phase aqueuse de départ 1 circule de la même manière que celle décrite pour la figure 4. Le compartiment cathodique central 43 est alimenté en une phase aqueuse nitrique 48 ce qui crée un courant gazeux chargé en NO$_x$ 49. Le reste du procédé est identique à celui décrit au sujet de la figure 3. Les mêmes références sont utilisées.

Des exemples non limitatifs vont maintenant être donnés.

Pour tous les exemples on utilise des anodes en titane platiné et des cathodes en titane massif.

Exemple 1

Cet exemple correspond au mode de réalisation illustré par la figure 2. On donne ci-dessous les compositions et les débits des différents flux.

| Flux | Composition | Débit |
|------|-------------|-------|
| 1 | Oxydes de TR (OT) = 460 g/l<br>$CeO_2$ = 45 %<br>$H^+$ = 1,7 N | 1360 l/h |
| 4 | $[Ce^{4+}]/[Ce]$ total = 0,98 | 1360 l/h |
| 6 | Tributylphosphate TBP = 70 %<br>Kérosène désaromatisé = 30 % | 2,8 m$^3$/h |
| 8 | OT = 252 g/l<br>$CeO_2$ / OT = $9.10^{-3}$ | |
| 20 A | | 2 m$^3$/h |
| 20 B | | 0,8 m$^3$/h |
| 11 | $HNO_3$ 1 N | 4 m$^3$/h |
| 17 | $H_2O$ | 400 l/h |

5

(Suite)

| Flux | Composition | Débit |
|---|---|---|
| 14 A | $CeO_2 = 45$ g/l <br> $CeO_2 / OT \geq 0,97$ <br> $H^+ = 0,8$ N | 2,7 m³/h |
| 14 B | " | 1,7 m³/h |
| 22 | $HNO_3$ 1 N | 1,6 m³/h |
| 24 | $CeO_2 = 45$ g/l <br> $[Ce^{4+}]/[Ce]$ Total : 0,98 <br> $CeO_2 / OT \geq 0,97$ | 1,7 m³/h |
| 29 | $H_2O$ | 160 l/h |
| 27 | $CeO_2 = 45$ g/l <br> $CeO_2 / OT \geq 0,999$ <br> $H^+ = 0,8$ N | 1,76 m³/h |

Conditions de fonctionnement des cellules :

Cellule 3 Intensité : 71 200 A
Surface active = 3 560 dm²
Tension = 3,5 V

Cellule 19 Intensité : 19 400 A
Surface active = 970 dm²
Tension = 3,5 V

Rendement faradique par cellule 60%
Taux de pureté de $CeO_2$ 99,9%
Batterie 5 : 1 étage pas de stripping
Batteries 16 et 30 : 4 étages

## Exemple 2

Cet exemple illustre le mode de réalisation de la figure 4 :

| Flux | Composition | Débit |
|---|---|---|
| 46 | $OT = 460$ g/l <br> $CeO_2 = 45$ % <br> $H^+ = 1,7$ N | 1360 l/h |
| 6 | $TBP = 70$ % <br> Kérosène désaromatisé = 30 % | 2,8 m³/h |
| 8 | $OT = 252$ g/l <br> $CeO_2 / OT = 5.10^{-3}$ | 1360 l/h |
| 11 | $HNO_3$ 5 N | 5,6 m³/h |
| 17 | $H_2O$ | 280 l/h |
| 14 | $CeO_2 = 47$ g/l <br> $CeO_2 / OT \geq 0,97$ <br> $H^+ = 4,8$ N | 5,88 m³/h |
| 47 | $[Ce^{4+}]/[Ce]$ total = 99 % | 1360 l/h |
| 50 | $[Ce^{4+}]/[Ce]$ total = 90 % | 1360 l/h |

Conditions de fonctionnement de la cellule :

Compartiment 41 $I_1 = 38\,800$ A

Compartiment 42 $I_2 = 3\,850$ A

6

$S_1$ = 1 940 dm²          $S_2$ = 1 940 dm²
Tension = 3 V          Tension = 2,2 V

Rendement Faradique 95%
Taux de pureté de $CeO_2$ = 97%
Batterie 5 : 1 étage pas de stripping
Batterie 16 : 4 étages

Exemple 3

Cet exemple concerne le mode de réalisation de la figure 5

| Flux | Composition | Débit |
|---|---|---|
| 1 | $OT = 460\ g/l$<br>$CeO_2 = 45\ \%$<br>$H^+ = 1,7\ N$ | 1360 l/h |
| 7 | $H_2O$ | 50 l/h |
| 8 | $OT = 248\ g/l$<br>$CeO_2\ /\ OT = 0,009$ | 1410 l/h |
| 48 | $HNO_3\ 6\ N$ | 280 l/h |
| 6 | $TBP = 70\ \%$<br>Kérosène désaromatisé $= 30\ \%$ | $2,8\ m^3/h$ |
| 38 | $H_2O$ | 825 l/h |
| 39 | $CeO_2\ /\ OT \geq 0,999$<br>$CeO_2 = 334\ g/l$<br>$H^+ = 1,9\ N$ | 825 l/h |

Conditions de fonctionnement de la cellule

Compartiment 41 $I_1$ = 38 800 A          Compartiment 42 $I_2$ = 3 850 A
$S_1$ = 1 940 dm²          $S_2$ = 1 940 dm²
Tension = 3 V          Tension = 2,2 V

Rendement Faradique 95%
Taux de pureté de $CeO_2$ = 99,9%
Batterie 5 : 2 étages un d'extraction - un de stripping
Batterie 37 : 9 étages

**Revendications**

1. Procédé de séparation du cérium et de terres rares à partir d'une phase aqueuse contenant les terres rares et le cérium (III), qui consiste à oxyder électrochimiquement le cérium (III) en cérium (IV) et à séparer le cérium des terres rares par extraction liquide-liquide à l'aide d'une phase organique extractive du cérium (IV) caractérisé en ce qu'il comporte les étapes suivantes :

$a_1$) on fait passer ladite phase aqueuse contenant les terres rares et le cérium (III) dans le compartiment anodique d'une cellule d'électrolyse ce par quoi le cérium (III) est oxydé en cérium (IV) ;

$b_1$) on met en contact la phase aqueuse issue du compartiment anodique précité avec une phase organique extractive pour le cérium (IV) ce par quoi après séparation des phases on obtient une phase organique chargée en cérium (IV) et une phase aqueuse chargée en terres rares ;

$c_1$) on fait passer la totalité ou une partie de la phase organique chargée en cérium (IV) dans le compartiment cathodique de la cellule d'électrolyse précitée, on alimente par une phase aqueuse nitrique ledit compartiment et on y forme un mélange intime de ladite phase aqueuse et de la phase organique ce par quoi on réduit le cérium (IV) en cérium (III) ;

$d_1$) on sépare le mélange issu du compartiment cathodique en une phase aqueuse chargée en

7

cérium (III) qui constitue la production et en une phase organique.

2. Procédé selon la revendication 1 caractérisé en ce qu'il comporte en plus les étapes suivantes :

$e_1$) on fait passer au moins une partie de la phase aqueuse chargée en cérium (III) obtenue à l'étape $d_1$ précitée dans le compartiment anodique d'une seconde cellule d'électrolyse ce par quoi on obtient à la sortie dudit compartiment une phase aqueuse chargée en cérium (IV) ;

$f_1$) on ne fait passer qu'une partie de la phase organique chargée en cérium (IV) obtenue à l'étape $b_1$ dans le compartiment cathodique de la première cellule d'électrolyse, l'autre partie de cette phase passant alors dans le compartiment cathodique de la seconde cellule d'électrolyse précitée, on alimente par une phase aqueuse nitrique ledit compartiment et on y forme un mélange intime de ladite phase aqueuse et de la phase organique, ce par quoi on réduit le cérium (IV) en cérium (III) ;

$g_1$) on sépare le mélange issu du compartiment cathodique de ladite seconde cellule en une phase aqueuse chargée en cérium (III) et en une phase organique.

3. Procédé selon la revendication 1 ou 2, caractérisé en ce que la phase organique obtenue après séparation dans l'étape $d_1$ ou $g_1$ est recyclée comme phase organique d'extraction à l'étape $b_1$.

4. Procédé selon l'une des revendications 1, 2 ou 3, caractérisé en ce que la phase organique obtenue après séparation dans l'étape $d_1$ ou $g_1$ et le cas échéant avant le recyclage précité, est mise en contact avec une phase aqueuse et en ce qu'après séparation des phases, la phase aqueuse résultante est réunie avec la phase aqueuse chargée en cérium (III) obtenue dans l'étape $d_1$ ou $g_1$.

5. Procédé selon l'une des revendications 1 à 4 caractérisé en ce qu'on utilise une cellule d'électrolyse comprenant deux compartiments anodiques et un compartiment cathodique situé entre les deux compartiments anodiques précités, en ce qu'on fait passer la phase aqueuse contenant les terres rares et le cérium (III) successivement dans chacun des deux compartiments anodiques de la cellule et en ce que la phase organique chargée en cérium (IV) obtenue à l'étape $b_1$ passe en totalité ou en partie dans le compartiment cathodique précité.

6. Procédé de séparation du cérium et de terres rares à partir d'une phase aqueuse contenant les terres rares et le cérium (III), qui consiste à oxyder électrochimiquement le cérium (III) cérium (IV) et à séparer le cérium des terres rares par extraction liquide-liquide à l'aide d'une phase organique extractive du cérium (IV) caractérisé en ce qu'il comporte les étapes suivantes :

$a_2$) on fait passer ladite phase aqueuse contenant les terres rares et le cérium (III) dans le compartiment anodique d'une cellule d'électrolyse ce par quoi le cérium (III) est oxydé en cérium (IV) ;

$b_2$) on met en contact la phase aqueuse issue du compartiment anodique précité avec une phase organique extractive pour le cérium (IV) ce par quoi après séparation des phases on obtient une phase organique chargée en cérium (IV) et une phase aqueuse chargée en terres rares ;

$c_2$) on alimente le compartiment cathodique de la cellule d'électrolyse précitée en une phase aqueuse nitrique ce par quoi on crée un dégagement de gaz comprenant des $NO_x$ ;

$d_2$) On met en contact la phase organique chargée en cérium (IV) de l'étape $b_2$ avec le courant de gaz précité ce par quoi on réduit le cérium (IV) en cérium (III) ;

$e_2$) la phase organique issue de l'étape $d_2$ est mise en contact avec une phase aqueuse ce par quoi après séparation des phases on obtient une phase aqueuse chargée en cérium (III) qui constitue la production et une phase organique substantiellement exempte de cérium.

7. Procédé selon la revendication 6, caractérisé en ce que la phase organique obtenue après séparation dans l'étape $e_2$ est recyclée comme phase organique d'extraction à l'étape $b_2$.

8. Procédé selon l'une des revendications 6 ou 7 caractérisé en ce qu'on utilise une cellule d'électrolyse comprenant deux compartiments anodiques et un compartiment cathodique situé entre les deux compartiments anodiques précités, en ce qu'on fait passer la phase aqueuse contenant les terres rares et le cérium (III) successivement dans chacun des deux compartiments anodiques de la cellule et en ce que le dégagement de gaz comprenant des $NO_x$ est crée par alimentation en acide nitrique du compartiment cathodique de la cellule.

9. Procédé selon l'une quelconque des revendications précédentes, caractérisé en ce qu'on utilise dans la composition de la phase organique extractive un extractant choisi parmi le groupe comprenant les phosphates, les phosphonates, les phosphinates, les oxydes de phosphine, les sulfoxydes.

10. Procédé selon la revendication 9, caractérisé en ce qu'on utilise en outre dans la composition de la phase organique extractive un diluant choisi parmi le groupe comprenant les hydrocarbures aliphatiques, les hydrocarbures halogénés.

11. Procédé selon la revendication 9 ou 10, caractérisé en ce qu'on utilise comme extractant un trialkylphosphate, notamment le tributylphosphate.

12. Procédé selon l'une quelconque des revendications précédentes, caractérisé en ce que les compartiments cathodiques des cellules sont alimentés par une phase aqueuse nitrique qui est soit une solution d'acide nitrique, soit une solution à base de nitrates.

13. Procédé selon la revendication 12 caractérisé en ce que la solution d'acide nitrique est à une concentration d'au moins 1 N, en particulier d'au moins 4 N.

14. Procédé selon la revendication 12 caractérisé en ce que les nitrates sont choisic parmi le nitrate d'ammonium, les nitrates alcalins ou alcalino-terreux, ou le nitrate de cérium.

15. Procédé selon la revendication 12 ou 14 caractérisé en ce que la solution à base de nitrate présente une acidité d'environ 0,5 à environ 2 N.

# EP 0 198 736 B1

**Claims**

1. A process for the separation of cerium and rare earths from an aqueous phase containing the rare earths and cerium (III), which comprises electrochemically oxidising the cerium (III) to cerium (IV) and separating the cerium from the rare earths by liquid-liquid extraction by means of an organic phase which is extractive in respect of the cerium (IV), characterised in that it comprises the following steps :

$a_1$) said aqueous phase containing the rare earths and cerium (III) is passed into the anodic compartment of an electrolysis cell whereby the cerium (III) is oxidised to cerium (IV) ;

$b_1$) the aqueous phase issuing from said anodic compartment is brought into contact with an organic phase which is extractive in respect of the cerium (IV) whereby after separation of the phases an organic phase which is charged with cerium (IV) and an aqueous phase which is charged with rare earths are obtained ;

$c_1$) the whole or a part of the organic phase which is charged with cerium (IV) is passed into the cathodic compartment of said electrolysis cell, said compartment is fed with an aqueous nitric phase and formed therein is an intimate mixture of said aqueous phase and the organic phase thereby reducing the cerium (IV) to cerium (III) ; and

$d_1$) the mixture issuing from the cathodic compartment is separated into an aqueous phase charged with cerium (III) which constitutes the production and an organic phase.

2. A process according to claim 1 characterised in that it further comprises the following steps :

$e_1$) at least a part of the aqueous phase charged with cerium (III) which is obtained in said step $d_1$ is passed into the anodic compartment of a second electrolysis cell, thereby obtaining an aqueous phase which is charged with cerium (IV) at the discharge of said compartment ;

$f_1$) only a part of the organic phase charged with cerium (IV) which is obtained in step $b_1$ is passed into the cathodic compartment of the first electrolysis cell, the other part of said phase then passing into the cathodic compartment of said second electrolysis cell, said compartment is fed with an aqueous nitric phase and formed therein is an intimate mixture of said aqueous phase and the organic phase whereby the cerium (IV) is reduced to cerium (III) ; and

$g_1$) the mixture issuing from the cathodic compartment of said second cell is separated into an aqueous phase charged with cerium (III) and an organic phase.

3. A process according to claim 1 or claim 2 characterised in that the organic phase obtained after separation in step $d_1$ or $g_1$ is recycled as the organic extraction phase to step $b_1$.

4. A process according to one of claims 1, 2 and 3 characterised in that the organic phase obtained after separation in step $d_1$ or $g_1$ and if appropriate before said recycling is brought into contact with an aqueous phase and that after separation of the phases the resulting aqueous phase is combined with the aqueous phase charged with cerium (III), which is obtained in step $d_1$ or $g_1$.

5. A process according to one of claims 1 to 4 characterised by using an electrolysis cell comprising two anodic compartments and a cathodic compartment which is disposed between said two anodic compartments, that the aqueous phase containing the rare earths and the cerium (III) is passed successively into each of the two anodic compartments of the cell, and that the organic phase which is charged with cerium (IV), obtained in step $b_1$, passes in its entirety or in part thereof into said cathodic compartment.

6. A process for the separation of cerium and rare earths from an aqueous phase containing the rare earths and cerium (III) which comprises electrochemically oxidising the cerium (III) to cerium (IV) and separating the cerium from the rare earths by liquid-liquid extraction by means of an organic phase which is extractive in respect of the cerium (IV) characterised in that it comprises the following steps :

$a_2$) said aqueous phase containing the rare earths and the cerium (III) is passed into the anodic compartment of an electrolysis cell whereby the cerium (III) is oxidised to cerium (IV) ;

$b_2$) the aqueous phase issuing from said anodic compartment is brought into contact with an organic phase which is extractive in respect of the cerium (IV) whereby after separation of the phases an organic phase which is charged with cerium (IV) and an aqueous phase which is charged with rare earths are obtained ;

$c_2$) the cathodic compartment of said electrolysis cell is fed with an aqueous nitric phase thereby causing gases comprising $NO_x$ to be given off ;

$d_2$) the organic phase charged with cerium (IV) from step $b_2$ is brought into contact with said gas flow whereby the cerium (IV) is reduced to cerium (III) ; and

$e_2$) the organic phase issuing from step $d_2$ is brought into contact with an aqueous phase whereby after separation of the phases an aqueous phase charged with cerium (III) which constitutes the production and an organic phase which is substantially free from cerium are obtained.

7. A process according to claim 6 characterised in that the organic phase obtained after separation in step $e_2$ is recycled as the organic extraction phase to step $b_2$.

8. A process according to one of claims 6 and 7 characterised by using an electrolysis cell comprising two anodic compartments and a cathodic compartment which is disposed between said two anodic compartments, that the aqueous phase containing the rare earths and the cerium (III) is passed

9

successively into each of the two anodic compartments of the cell and that gases comprising $NO_x$ are caused to be given off by feeding nitric acid to the cathodic compartment of the cell.

9. A process according to any one of the preceding claims characterised by using in the composition of the extractive organic phase an extracting agent selected from the group comprising phosphates, phosphonates, phosphinates, phosphine oxides and sulphoxides.

10. A process according to claim 9 characterised by further using in the composition of the extractive organic phase a diluent selected from the group comprising aliphatic hydrocarbons and halogenated hydrocarbons.

11. A process according to claim 9 or claim 10 characterised by using a trialkyl phosphate, in particular tributyl phosphate, as the extracting agent.

12. A process according to any one of the preceding claims characterised in that the cathodic compartments of the cells are fed with an aqueous nitric phase which is either a solution of nitric acid or a solution based on nitrates.

13. A process according to claim 12 characterised in that the solution of nitric acid is at a level of concentration of at least 1 N, in particular at least 4 N.

14. A process according to claim 12 characterised in that the nitrates are selected from ammonium nitrate, alkali metal or alkaline-earth metal nitrates or cerium nitrate.

15. A process according to claim 12 or claim 14 characterised in that the nitrate-base solution has a degree of acidity of about 0.5 to about 2 N.

**Patentansprüche**

1. Verfahren zur Abtrennung von Cer und Seltenen Erden aus einer wäßrigen Phase, enthaltend die Seltenen Erden und das Cer (III), das darin besteht, daß man das Cer (III) elektrochemisch zu Cer (IV) oxidiert und das Cer von den Seltenen Erden abtrennt durch flüssig/flüssig-Extraktion mit Hilfe eines organischen Extraktionsmittels für Cer (IV), dadurch gekennzeichnet, daß es die folgenden Stufen umfaßt:

$a_1$) man führt die erwähnte wäßrige Phase, die die Seltenen Erden und das Cer (III) enthält, in eine Anodenkammer einer Elektrolysezelle, wo das Cer (III) zu Cer (IV) oxidiert wird;

$b_1$) man bringt die aus der erwähnten Anodenkammer austretende wäßrige Phase mit einer organischen Extraktionsphase für das Cer (IV) zusammen, wodurch man nach Trennung der Phasen eine organische Cer (IV) enthaltende Phase und eine wäßrige Seltene Erden enthaltende Phase erhält;

$c_1$) man führt die gesamte oder einen Teil der organischen Cer (IV) enthaltenden Phase in die Kathodenkammer der oben erwähnten Elektrolysezelle, man, speist eine wässrige Nitrat bzw. Salpetersäure enthaltende Phase in die Kammer und bildet dort ein inniges Gemisch der wäßrigen Phase und der organischen Phase, wodurch das Cer (IV) zu Cer (III) reduziert wird;

$d_1$) man trennt das aus der Kathodenkammer austretende Gemisch in eine wäßrige Cer (III) enthaltende Phase, die das Produkt darstellt, und in eine organische Phase.

2. Verfahren nach Anspruch 1, dadurch gekennzeichnet, daß es zusätzlich die flogenden Stufen umfaßt:

$e_1$) man leitet mindestens einen Teil der Cer (III) enthaltenden wäßrigen Phase, die in der oben erwähnten Stufe $d_1$ erhalten worden ist, in die Anodenkammer einer zweiten Elektrolysezelle, wodurch man am Ausgang dieser Kammer eine wäßrige Cer (IV) enthaltende Phase erhält;

$f_1$) man führt nur einen Teil der organischen Cer (IV) enthaltenden Phase, die in Stufe $b_1$ erhalten worden ist, in die Kathodenkammer der ersten Elektrolysezelle und den anderen Teil dieser Phase in die Kathodenkammer der zweiten erwähnten Elektrolysezelle, man speist eine wässrige Nitrat bzw. Salpetersäure enthaltende Phase in die erwähnte Kammer ein und man bildet dort eine inniges Gemisch der erwähnten wäßrigen Phase und der organischen Phase, wodurch man das Cer (IV) zu Cer (III) reduziert;

$g_1$) man trennt das aus der Kathodenkammer der erwähnten zweiten Zelle austretende Gemisch in eine wäßrige Cer (III) enthaltende Phase und eine organische Phase.

3. Verfahren nach Anspruch 1 oder 2, dadurch gekennzeichnet, daß die organische Phase, die erhalten worden ist nach Trennung in der Stufe $d_1$ oder $g_1$, als organische Extraktionsphase wieder in die Stufe $b_1$ zurückgeführt wird.

4. Verfahren nach einem der Ansprüche 1, 2 oder 3, dadurch gekennzeichnet, daß die organische Phase, die erhalten worden ist nach Trennung in der Stufe $d_1$ oder $g_1$ und gegebenenfalls vor der erwähnten Rückführung mit einer wäßrigen Phase zusammengebracht wird und nach Trennung der Phasen die erhaltene wäßrige Phase mit der Cer (III) enthaltenden wäßrigen Phase, die in Stufe $d_1$ oder $g_1$ erhalten worden ist, vereinigt wird.

5. Verfahren nach einem der Ansprüche 1 bis 4, dadurch gekennzeichnet, daß man eine Elektrolysezelle anwendet, umfassend zwei Anodenkammern und eine Kathodenkammer, die sich zwischen den beiden erwähten Anodenkammern befindet, und daß man die wäßrige, die Seltenen Erden und das Cer (III) enthaltende Phase nacheinander in jede der zwei Anodenkammern der Zelle leitet und daß die organische Cer (IV) enthaltende Phase, die in Stufe $b_1$ erhalten worden ist, vollständig oder teilweise in die erwähnte Kathodenkammer geführt wird.

6. Verfahren zur Abtrennung von Cer und Seltenen Erden aus einer wäßrigen Phase, enthaltend die Seltenen Erden und das Cer (III), das darin besteht, daß man das Cer (III) elektrochemisch zu Cer (IV) oxidiert und das Cer von den Seltenen Erden abtrennt durch flüssig/flüssig-Extraktion mit Hilfe eines organischen Extraktionsmittels für Cer (IV), dadurch gekennzeichnet, daß es die folgenden Stufen umfaßt :

$a_2$) man führt die erwähnte wäßrige Phase, die die Seltenen Erden und das Cer (III) enthält, in eine Anodenkammer einer Elektrolysezelle, wo das Cer (III) zu Cer (IV) oxidiert wird ;

$b_2$) man bringt die aus der erwähnten Anodenkammer austretende wäßrige Phase mit einer organischen Extraktionsphase für das Cer (IV) zusammen, wodurch man nach Trennung der Phasen eine organische Cer (IV) enthaltende Phase und eine wäßrige Seltene Erden enthaltende Phase erhält ;

$c_2$) man speist in die Kathodenkammer der oben erwähnten Elektrolysezelle eine wäßrige Nitrat bzw. Salpetersäure enthaltende Phase ein, wodurch man ein Freiwerden von Gas, umfassend $NO_x$, hervorruft ;

$d_2$) man bringt die organische Cer (IV) enthaltende Phase der Stufe $b_2$ zusammen mit dem oben erwähnten Gasstrom, wodurch man das Cer (IV) zu Cer (III) reduziert ;

$e_2$) die aus der Stufe $d_2$ austretende organische Phase wird mit einer wäßrigen Phase in Berührung gebracht, wobei man nach Trennung der Phasen eine wäßrige, Cer (III) enthaltende Phase, die das Produkt darstellt und eine im wesentlichen von Cer freie organische Phase erhält.

7. Verfahren nach Anspruch 6, dadurch gekennzeichnet, daß die organische Phase, die nach der Trennung in Stufe $e_2$ erhalten worden ist, als organische Extraktionsphase in Stufe $b_2$ zurückgeführt wird.

8. Verfahren nach einem der Ansprüche 6 oder 7, dadurch gekennzeichnet, daß man eine Elektrolysezelle anwendet, umfassend zwei Anodenkammern und eine Kathodenkammer, die sich zwischen den beiden erwähnten Anodenkammern befindet, und daß man die wäßrige, die Seltenen Erden und das Cer (III) enthaltende Phase nacheinander in jede der zwei Anodenkammern der Zelle leitet und daß das Freiwerden von Gas, enthaltend $NO_x$, hervorgerufen wird durch Einspeisen von Salpetersäure in die Kathodenkammer der Zelle.

9. Verfahren nach einem der vorangehenden Ansprüche, dadurch gekennzeichnet, daß man in der organischen Extraktionsphase ein Extraktionsmittel verwendet, ausgewählt aus der Gruppe umfassend die Phosphate, die Phosphonate, die Phosphinate, die Phosphinoxide und die Sulfoxide.

10. Verfahren nach Anspruch 9, dadurch gekennzeichnet, daß man unter anderem in der organischen Extraktionsmittelphase ein Verdünnungsmittel verwendet, ausgewählt aus der Gruppe umfassend die aliphatischen Kohlenwasserstoffe und die halogenierten Kohlenwasserstoffe.

11. Verfahren nach Anspruch 9 oder 10, dadurch gekennzeichnet, daß man als Extraktionsmittel ein Trialkylphosphat, insbesondere Tributylphosphat, verwendet.

12. Verfahren nach einem der vorangehenden Ansprüche, dadurch gekennzeichnet, dass in die Kathodenkammern der Zellen eine Wässrige Nitrat bzw. Salpetersäure enthaltende Phase eingespeist wird, die entweder eine Salpetersäurelösung oder eine Lösung auf der Grundlage von Nitraten ist.

13. Verfahren nach Anspruch 12, dadurch gekennzeichnet, daß die Salpetersäurelösung eine Konzentration von mindestens 1 N, insbesondere mindestens 4 N, aufweist.

14. Verfahren nach Anspruch 12, dadurch gekennzeichnet, daß die Nitrate ausgewählt sind aus Ammoniumnitrat, den Alkali- oder Erdalkalinitraten oder Cernitrat.

15. Verfahren nach Anspruch 12 oder 14, dadurch gekennzeichnet, daß die Lösung auf der Grundlage von Nitrat eine Azidität von etwa 0,5 bis etwa 2 N aufweist.

FIG.1

FIG.3

FIG.2

EP 0 198 736 B1

FIG. 4

FIG. 5

3